(19) Europäisches Patentamt
European Patent Office
Office européen des brevets

(11) **EP 3 254 300 B1**

(12) **EUROPEAN PATENT SPECIFICATION**

(45) Date of publication and mention
of the grant of the patent:
**30.10.2019 Bulletin 2019/44**

(51) Int Cl.:
**H01J 49/00** *(2006.01)*

(21) Application number: **16746192.0**

(86) International application number:
**PCT/IB2016/050481**

(22) Date of filing: **29.01.2016**

(87) International publication number:
**WO 2016/125060 (11.08.2016 Gazette 2016/32)**

(54) **DETECTING MASS SPECTROMETRY BASED SIMILARITY VIA CURVE SUBTRACTION**

ERKENNUNG VON MASSENSPEKTROMETRIEBASIERTER ÄHNLICHKEIT MITTELS KURVENSUBTRAKTION

DÉTECTION DE SIMILARITÉ BASÉE SUR LA SPECTROMÉTRIE DE MASSE PAR LE BIAIS D'UNE SOUSTRACTION DE COURBES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2015 US 201562112212 P**

(43) Date of publication of application:
**13.12.2017 Bulletin 2017/50**

(73) Proprietor: **DH Technologies Development PTE. Ltd.**
**Singapore 739256 (SG)**

(72) Inventors:
• **SHERMAN, James Andrew**
**Toronto, Ontario M4Y 0A4 (CA)**
• **TATE, Stephen A.**
**Barrie, Ontario L4M 7K2 (CA)**

(74) Representative: **J A Kemp LLP**
**14 South Square**
**Gray's Inn**
**London WC1R 5JJ (GB)**

(56) References cited:
WO-A2-2005/113830    WO-A2-2009/091933
US-A1- 2013 096 847    US-A1- 2013 131 998
US-A1- 2014 332 681

**Description**

**INTRODUCTION**

Mass spectrometers are often coupled with chromatography or other separation systems in order to identify and characterize eluting known compounds of interest from a sample. In such a coupled system, the eluting solvent is ionized and a series of mass spectra are obtained from the eluting solvent at specified time intervals. These time intervals range from, for example, 1 second to 100 minutes or greater. The series of mass spectra form a chromatogram, or extracted ion chromatogram (XIC).

Peaks found in the XIC are used to identify or characterize a known compound in the sample. In complex mixtures, however, interference with other peaks having the same mass-to-charge ratio (m/z) can make it difficult to determine a peak representing a known compound. In some cases, no information is available regarding the expected retention time of the known compound. In other cases, an approximate retention time of the known compound may be known. However, even in this latter case, the exact peak of the known compound can be ambiguous if the sample is complex or if there is more than a small amount of retention time variation between samples. As a result, it is often difficult to identify or characterize the known compound in these cases.

In traditional separation coupled mass spectrometry systems, a fragment or product ion of a known compound is selected for analysis. A mass spectrometry/ mass spectrometry (MS/MS) scan is then performed at each interval of the separation for a mass range that includes the product ion. The intensity of the product ion found in each MS/MS scan is collected over time and analyzed as a collection of spectra, or an XIC, for example.

For a simple sample mixture, for example, a single peak representing the product ion is typically found in the XIC at the expected retention time of the known compound. For more complex mixtures, however, two or more peaks that represent the product ion are located at one or more additional time intervals in the collection of spectra in addition to the expected retention time of the known compound. In other words, an XIC for the product ion can have two or more peaks.

One traditional method of identifying compounds of interest in more complex mixtures has been to locate time intervals where two or more of the product ions of the known compound have peaks. This method is used in proteomics, for example, when a peptide of a known sequence is quantitated.

In a typical multiple reaction monitoring (MRM) method two or more MRM transitions are monitored, each corresponding to a different product ion transition of the peptide. If previous discovery data is available, these transitions are based on the largest product ions that are observed in the data. Otherwise these transitions are based on predicted y-ions, for example. The XIC is analyzed for these two or more MRM transitions. The time at which there is a product ion peak for all transitions is used to characterize the known compound.

For complex samples, especially if the expected retention time is not known accurately, there can be ambiguity in the collection of product ion spectra. For example, there can be more than one retention time or time interval for which there is a product ion peak for each of the two or more MRM transitions.

Little additional information is available to address the ambiguity introduced by complex samples. In traditional separation coupled mass spectrometry systems, each MS/MS scan for each product ion at each time interval is typically performed using a narrow precursor ion mass window width. As a result, the product ion mass spectrum at a particular time interval for each fragment ion that is available after data acquisition can provide little additional insight.

U.S. Patent Application No. 14/368,874 (hereinafter the "'874 Application"), entitled "Use of Windowed Mass Spectrometry Data for Retention Time Determination or Confirmation," describes of method of collecting additional MS/MS data and using this data to address the ambiguity introduced by complex samples. In the '874 Application, a separation coupled mass spectrometry system is used that performs MS/MS scans at each time interval using one or more sequential mass window widths in order to span an entire mass range. In other words, spectral information for an entire mass range is obtained at each time interval in the separation. One method for performing MS/MS scans using one or more sequential mass window widths in order to span an entire mass is ABSciex's SWATH™ technique.

High-resolution and high-throughput instruments allow a mass range to be accurately scanned within a time interval using multiple scans with adjacent or overlapping mass window widths. Results from the multiple scans are pieced together to produce a spectrum for the entire mass range at each time interval. XICs can then be calculated for any mass in the mass range over any time interval of the separation.

In the '874 Application, the spectral information for an entire mass range collected using the windowed acquisition method is used to resolve the retention time ambiguity in complex mixtures. In other words, when a product ion is found to have two or more peaks in the collection of spectra at two or more different time intervals in the separation, a product ion mass spectrum of the entire mass range at each of the different time intervals is analyzed to determine the actual retention time. A variety of criteria are used to analyze the mass spectra of the entire mass range, including charge state, isotopic state, mass accuracy, and one or more mass differences associated with a known fragmentation profile of the known compound. Based on these criteria each peak of the product ion at the two or more time intervals is scored.

A retention time for the known compound is identified at the peak with the highest score.

The method of the '874 Application can also use more than one product ion of the known compound to resolve the retention time ambiguity. Peaks of each of the two or more product ions are independently scored at the two or more time intervals and the scores of the peaks of the two or more product ions are combined at each of the two or more time intervals. The retention time is then determined from the combined scores at each of the two or more time intervals. In other words, the method of the '874 Application groups the peaks of two or more different product ions of the known compound at each time interval and compares the combined score of the group at each time interval.

The method of the '874 Application does not describe, however, how the XIC peaks of the two or more different product ions of the known compound are selected. As described above with regard to MRM transitions, if previous discovery data is available, the MRM transitions selected are based on the largest product ions that are observed in the data. In other words, the MRM transitions with the most intense product ion peaks are selected.

Suppose, for example, the method of the '874 Application similarly groups peaks by first selecting the most intense peak of a first product ion and then selecting peaks of other product ions closest in time to the apex of the most intense peak of a first product ion. Now suppose the most intense peak of a first product ion is from a precursor ion that is not the known compound. The peaks of other product ions are then grouped and scored with the wrong peak. Consequently, the results of the method of the '874 Application are highly dependent on proper selection of peaks for the group of peaks.

Currently, the mass spectrometry industry lacks a reliable and accurate method of selecting peak groups of a known compound from XICs of multiple product ions collected over a large mass range.

## SUMMARY

The invention is defined in the claims.

A system is disclosed for grouping extracted ion chromatogram (XIC) peaks of two or more product ions of a known compound. The system includes a separation device, a mass spectrometer, and a processor.

The separation device separates a known compound from a sample mixture. The mass spectrometer performs at each retention time of a plurality of retention times one or more mass spectrometry/mass spectrometry (MS/MS) scans on the separating sample mixture using one or more sequential mass window widths in order to span an entire mass range, producing a collection of product ion spectra for the entire mass range for the plurality of retention times.

The processor receives the collection of product ion spectra for the entire mass range for the plurality of retention times, and selects $M$ product ions of the known compound. The processor further calculates an XIC for each of the $M$ product ions from the collection of product ion spectra, producing $M$ XICs. The processor further subtracts each XIC of the $M$ XICs from each of the other $M$ XICs, producing $\binom{M}{2}$ subtraction curves. Each subtraction curve is calculated from a first XIC and a second XIC. At each retention time, normalizing an intensity of the first XIC at the each retention time and two or more intensities of the first XIC at two or more adjacent retention times are normalized. An intensity of the second XIC at the each retention time and two or more intensities of the second XIC at the adjacent retention times are normalized. The normalized intensities of the second XIC are subtracted from the corresponding normalized intensities of the first XIC. A statistical measure of the difference intensities is calculated.

The processor further identifies one or more regions of one or more retention times where one or more subtraction curves of the $\binom{M}{2}$ subtraction curves have values that are within a threshold value of zero. For each region of the one or more regions, the processor obtains two or more XICs used to calculate the one or more subtraction curves identifying the region and adds each peak of the two or more XICs that is in the region to a peak group.

A method is disclosed for grouping XIC peaks of two or more product ions of a known compound. A collection of product ion spectra for an entire mass range for a plurality of retention times is obtained. A known compound is separated from a sample mixture using a separation device. One or more MS/MS scans are performed on the separating sample mixture at each retention time of a plurality of retention times using one or more sequential precursor ion mass window widths in order to span the entire mass range, producing the collection of product ion spectra for the entire mass range for the plurality of retention times using a mass spectrometer. $M$ product ions of the known compound are selected using a processor. An XIC is calculated for each of the $M$ product ions from the collection of product ion spectra using the processor, producing $M$ XICs.

Each XIC of the $M$ XICs is subtracted from each of the other $M$ XICs using the processor, producing $\binom{M}{2}$ subtraction curves. Each subtraction curve is calculated from a first XIC and a second XIC. At each retention time, an intensity of the first XIC at the each retention time and two or more intensities of the first XIC at two or more adjacent retention times are normalized. An intensity of the second XIC at the each retention time and two or more intensities of the second XIC at the adjacent retention times are normalized. The normalized intensities of the second XIC are subtracted from the corresponding normalized intensities of the first XIC. A statistical measure of the difference intensities is calculated.

One or more regions of one or more retention times where one or more subtraction curves of the $\binom{M}{2}$ subtraction curves have values that are within a threshold value of zero are identified using the processor. For each region of the one or more regions, two or more XICs used to calculate the one or more subtraction curves identifying the region are obtained and each peak of the two or more XICs that is in the region is added to a peak group using the processor.

A computer program product is disclosed that includes a non-transitory and tangible computer-readable storage medium whose contents include a program with instructions being executed on a processor so as to perform a method for grouping XIC peaks of two or more product ions of a known compound. The method includes providing a system, wherein the system comprises one or more distinct software modules, and wherein the distinct software modules comprise a measurement module and an analysis module.

The measurement module obtains a collection of product ion spectra for an entire mass range for a plurality of retention times. A known compound is separated from a sample mixture using a separation device. One or more MS/MS scans are performed on the separating sample mixture at each retention time of a plurality of retention times using one or more sequential precursor ion mass window widths in order to span the entire mass range, producing the collection of product ion spectra for the entire mass range for the plurality of retention times using a mass spectrometer.

The analysis module selects $M$ product ions of the known compound. The analysis module calculates an XIC for each of the $M$ product ions from the collection of product ion spectra, producing $M$ XICs. The analysis module subtracts each XIC of the $M$ XICs from each of the other $M$ XICs, producing $\binom{M}{2}$ subtraction curves. Each subtraction curve is calculated from a first XIC and a second XIC. At each retention time, an intensity of the first XIC at the each retention time and two or more intensities of the first XIC at two or more adjacent retention times are normalized. Similarly, an intensity of the second XIC at the each retention time and two or more intensities of the second XIC at the adjacent retention times are normalized. The normalized intensities of the second XIC are subtracted from the corresponding normalized intensities of the first XIC. A statistical measure of the difference intensities is calculated.

The analysis module identifies one or more regions of one or more retention times where one or more subtraction curves of the $\binom{M}{2}$ subtraction curves have values that are within a threshold value of zero. For each region of the one or more regions, the analysis module obtains two or more XICs used to calculate the one or more subtraction curves identifying the region and adds each peak of the two or more XICs that is in the region to a peak group.

These and other features of the applicant's teachings are set forth herein.

## BRIEF DESCRIPTION OF THE DRAWINGS

The skilled artisan will understand that the drawings, described below, are for illustration purposes only. The drawings are not intended to limit the scope of the present teachings in any way.

Figure 1 is a block diagram that illustrates a computer system, in accordance with various embodiments.

Figure 2 is an exemplary plot of five extracted ion chromatograms (XICs) for five product ions of known compound, in accordance with various embodiments.

Figure 3 is an exemplary plot of a detailed portion of the five XICs shown in Figure 2 between retention times 50 and 65, in accordance with various embodiments.

Figure 4 is an exemplary plot of a subtraction curve that shows the mean values calculated from the local subtraction of intensities of two XICs of the XICs shown in Figure 2, in accordance with various embodiments.

Figure 5 is an exemplary plot of a subtraction curve that shows the standard deviation values calculated from the local subtraction of intensities of two XICs of the XICs shown in Figure 2, in accordance with various embodiments.

Figure 6 is an exemplary plot of the $\binom{5}{2}$ subtraction curves showing standard deviation values calculated from the five XICs of Figure 2, in accordance with various embodiments.

Figure 7 is an exemplary plot of a detailed portion of the $\binom{5}{2}$ subtraction curves showing standard deviation values shown in Figure 6 between retention times 50 and 65, in accordance with various embodiments.

Figure 8 is a schematic diagram showing a system for grouping XIC peaks of two or more product ions of a known compound, in accordance with various embodiments.

Figure 9 is an exemplary flowchart showing a method for grouping XIC peaks of two or more product ions of a known compound, in accordance with various embodiments.

Figure 10 is a schematic diagram of a system that includes one or more distinct software modules that perform a method for grouping XIC peaks of two or more product ions of a known compound, in accordance with various embodiments.

Before one or more embodiments of the present teachings are described in detail, one skilled in the art will appreciate that the present teachings are not limited in their application to the details of construction, the arrangements of components, and the arrangement of steps set forth in the following detailed description or illustrated in the drawings. Also, it is to be understood that the phraseology and terminology used herein is for the purpose of description and should not be regarded as limiting.

## DESCRIPTION OF VARIOUS EMBODIMENTS

COMPUTER-IMPLEMENTED SYSTEM

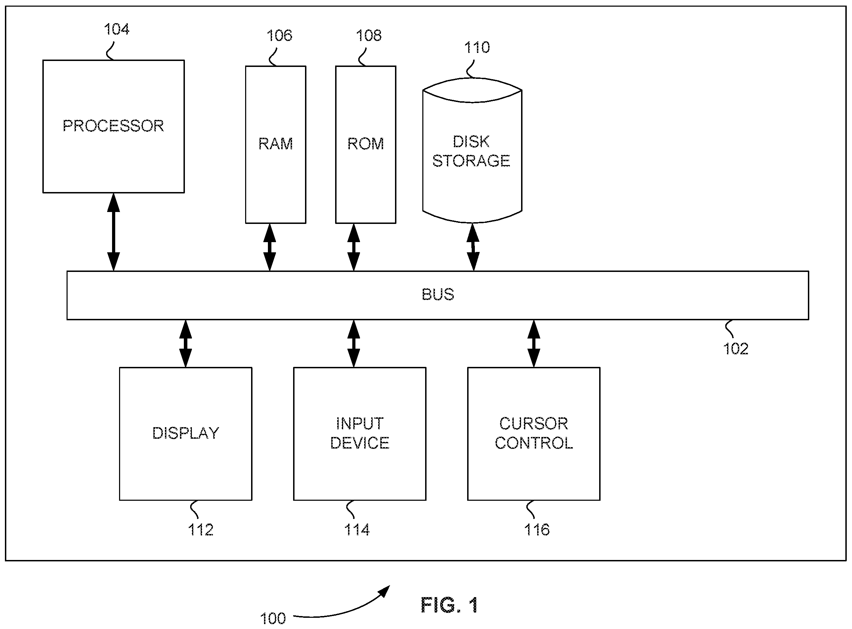

Figure 1 is a block diagram that illustrates a computer system 100, upon which embodiments of the present teachings may be implemented. Computer system 100 includes a bus 102 or other communication mechanism for communicating information, and a processor 104 coupled with bus 102 for processing information. Computer system 100 also includes a memory 106, which can be a random access memory (RAM) or other dynamic storage device, coupled to bus 102 for storing instructions to be executed by processor 104. Memory 106 also may be used for storing temporary variables or other intermediate information during execution of instructions to be executed by processor 104. Computer system 100 further includes a read only memory (ROM) 108 or other static storage device coupled to bus 102 for storing static information and instructions for processor 104. A storage device 110, such as a magnetic disk or optical disk, is provided and coupled to bus 102 for storing information and instructions.

Computer system 100 may be coupled via bus 102 to a display 112, such as a cathode ray tube (CRT) or liquid crystal display (LCD), for displaying information to a computer user. An input device 114, including alphanumeric and other keys, is coupled to bus 102 for communicating information and command selections to processor 104. Another type of user input device is cursor control 116, such as a mouse, a trackball or cursor direction keys for communicating direction information and command selections to processor 104 and for controlling cursor movement on display 112. This input device typically has two degrees of freedom in two axes, a first axis (*i.e.*, x) and a second axis (*i.e.*, y), that allows the device to specify positions in a plane.

A computer system 100 can perform the present teachings. Consistent with certain implementations of the present teachings, results are provided by computer system 100 in response to processor 104 executing one or more sequences of one or more instructions contained in memory 106. Such instructions may be read into memory 106 from another computer-readable medium, such as storage device 110. Execution of the sequences of instructions contained in memory 106 causes processor 104 to perform the process described herein. Alternatively hard-wired circuitry may be used in place of or in combination with software instructions to implement the present teachings. Thus implementations of the present teachings are not limited to any specific combination of hardware circuitry and software.

The term "computer-readable medium" as used herein refers to any media that participates in providing instructions to processor 104 for execution. Such a medium may take many forms, including but not limited to, non-volatile media, volatile media, and transmission media. Non-volatile media includes, for example, optical or magnetic disks, such as storage device 110. Volatile media includes dynamic memory, such as memory 106. Transmission media includes coaxial cables, copper wire, and fiber optics, including the wires that comprise bus 102.

Common forms of computer-readable media include, for example, a floppy disk, a flexible disk, hard disk, magnetic tape, or any other magnetic medium, a CD-ROM, digital video disc (DVD), a Blu-ray Disc, any other optical medium, a thumb drive, a memory card, a RAM, PROM, and EPROM, a FLASH-EPROM, any other memory chip or cartridge, or any other tangible medium from which a computer can read.

Various forms of computer readable media may be involved in carrying one or more sequences of one or more instructions to processor 104 for execution. For example, the instructions may initially be carried on the magnetic disk of a remote computer. The remote computer can load the instructions into its dynamic memory and send the instructions over a telephone line using a modem. A modem local to computer system 100 can receive the data on the telephone line and use an infra-red transmitter to convert the data to an infra-red signal. An infra-red detector coupled to bus 102 can receive the data carried in the infra-red signal and place the data on bus 102. Bus 102 carries the data to memory 106, from which processor 104 retrieves and executes the instructions. The instructions received by memory 106 may optionally be stored on storage device 110 either before or after execution by processor 104.

In accordance with various embodiments, instructions configured to be executed by a processor to perform a method are stored on a computer-readable medium. The computer-readable medium can be a device that stores digital information. For example, a computer-readable medium includes a compact disc read-only memory (CD-ROM) as is known in the art for storing software. The computer-readable medium is accessed by a processor suitable for executing instructions configured to be executed.

The following descriptions of various implementations of the present teachings have been presented for purposes of illustration and description. It is not exhaustive and does not limit the present teachings to the precise form disclosed. Modifications and variations are possible in light of the above teachings or may be acquired from practicing of the present teachings. Additionally, the described implementation includes software but the present teachings may be implemented as a combination of hardware and software or in hardware alone. The present teachings may be implemented with both object-oriented and non-object-oriented programming systems.

## REGIONS OF SIMILARITY FOUND THROUGH CURVE SUBTRACTION

As described above, in complex samples, the extracted ion chromatogram (XIC) for a product ion of a known compound can have two or more peaks. As a result, the actual retention time for the known compound that can be found from the XIC is ambiguous. This ambiguity can be addressed both by collecting additional product ion data over a mass range at each time interval and using the additional product ion data to determine the correct retention time. The additional product ion data can be used to group XIC peaks of the product ion with XIC peaks of other product ions of the known compound. An XIC peak of the product ion that is found to correspond with XIC peaks of other product ions of the known compound is more likely to be a peak of the known compound and have the correct retention time. Unfortunately, the mass spectrometry industry, to date, has been unable obtain a systematic, reliable, and accurate method of selecting peak groups of a known compound from XICs of multiple product ions collected over a large mass range.

In various embodiments, XIC peak groups from different product ions of a known compound are reliably and accurately identified by locally comparing groups of adjacent intensities in pairs of XICs. Like the method of the '874 Application, this method relies on collecting additional product ion data for a mass range at each time interval of a separation. This additional product ion data is collected, for example, by performing MS/MS scans at each time interval using one or more sequential mass window widths in order to span the entire mass range. Results from the multiple scans are pieced together to produce a spectrum for the entire mass range at each time interval. XICs can then be calculated for any mass in the mass range over any time interval of the separation. ABSciex's SWATH™ technique is an exemplary method of the collecting this data.

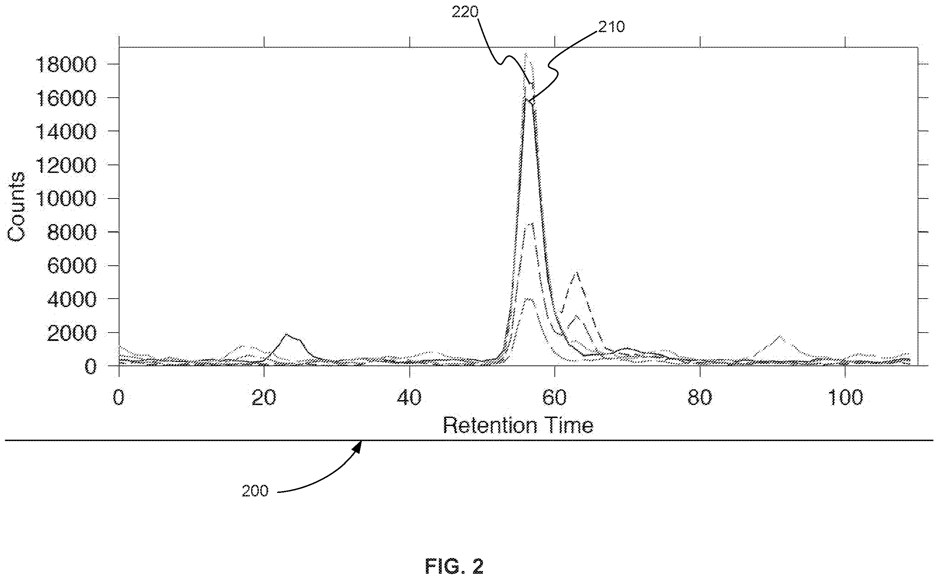

Figure 2 is an exemplary plot 200 of five XICs for five product ions of known compound, in accordance with various embodiments. The five XICs of plot 200 are calculated from data collected by performing MS/MS scans at each time interval of a separation using one or more sequential mass window widths in order to span the entire mass range. The five XICs of plot 200 all appear to have regions of similarity around a retention time of 56.

In various embodiments, regions of similarity are found by locally comparing or subtracting groups of intensities at adjacent retention times in pairs of XICs. For example, the intensities of XIC 220 are not simply subtracted from the intensities of XIC 210 at the same retention times. Instead, at each retention time, the intensity of XIC 210 and the intensities of XIC 210 at two or more adjacent retention times are divided by the intensity of XIC 210 at the retention time, effectively normalizing a first group of intensities of XIC 210. At the same retention time, the intensity of XIC 220 and the intensities of XIC 220 at the two or more adjacent retention times are divided by the intensity of XIC 220 at the retention time, effectively normalizing a second group of intensities of XIC 220. Each intensity of the second group is then subtracted from the corresponding intensity of the first group, producing a set of difference values. A single value is obtained for each retention time by calculating a statistical measure of the set of difference values. A statistical measure can be, but is not limited to, the mean, mode, median, variance, or standard deviation of the set of difference values.

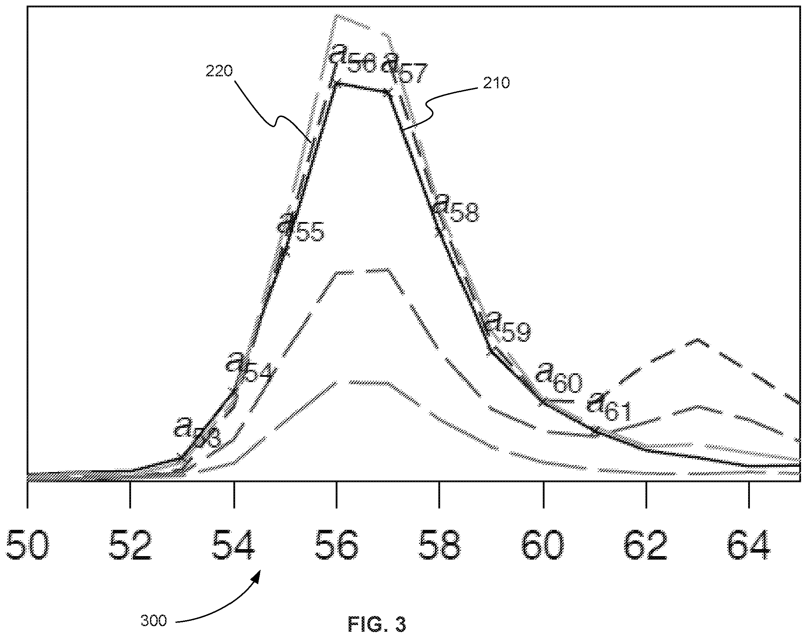

Figure 3 is an exemplary plot 300 of a detailed portion of the five XICs shown in Figure 2 between retention times 50 and 65, in accordance with various embodiments. Plot 300 shows, for example, how regions of similarity are found by locally comparing or subtracting groups of nine intensities, $N = 9$, at adjacent retention times in pairs of XICs. In plot 300, the nine intensities of XIC 210 that are normalized at retention time 57 are shown as $a_{53}$, $a_{54}$, $a_{55}$, $a_{56}$, $a_{57}$, $a_{58}$, $a_{59}$, $a_{60}$, and $a_{61}$. Each of these nine values is normalized, for example, by dividing by $a_{57}$. The corresponding nine intensities of XIC 220 that are normalized at retention time 57 are, for example, $b_{53}$, $b_{54}$, $b_{55}$, $b_{56}$, $b_{57}$, $b_{58}$, $b_{59}$, $b_{60}$, and $b_{61}$ (not shown). Similarly, each of these nine values is normalized, for example, by dividing by $b_{57}$. After normalization, these nine intensities of XIC 220 are subtracted from the corresponding nine intensities of XIC 210 producing a set of difference values. A single value is obtained for retention time 57 by calculating a statistical measure of the set of difference values. The statistical measures calculated for each retention time of the XICs compared can be plotted as a comparison or subtraction curve.

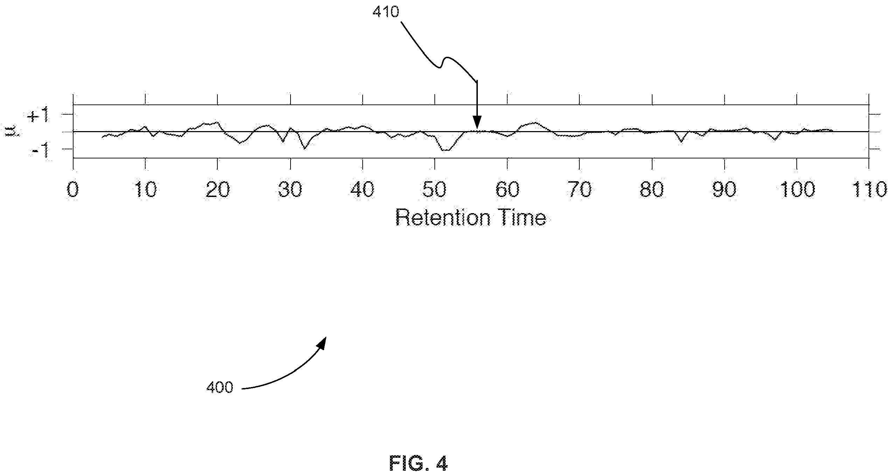

Figure 4 is an exemplary plot 400 of a subtraction curve that shows the mean values calculated from the local subtraction of intensities of two XICs of the XICs shown in Figure 2, in accordance with various embodiments. Each mean value, $\mu$, shown in plot 400 is calculated, for example, according Equation (1).

$$\mu_{i+m} = \frac{1}{N}\sum_{j=1}^{N}\left(\left(\frac{a_{i+j}}{a_{i+m}}\right)^{\frac{1}{2}} - \left(\frac{b_{i+j}}{b_{i+m}}\right)^{\frac{1}{2}}\right) \qquad (1)$$

At each retention time, $i + m$, each intensity value, $b$, of $N$ adjacent of intensity values of a second XIC is normalized and subtracted from each corresponding normalized value, $a$, of $N$ adjacent of intensity values of a first XIC. $N$ is an odd number and $m$ is the midpoint of $N$.

Returning to Figure 3, plot 300 shows, for example, using nine, $N = 9$, intensities to calculate a mean at each retention time. In plot 300, the nine intensities of XIC 210 used in calculating a mean at retention time 57 are shown. These nine intensities are $a_{53}$, $a_{54}$, $a_{55}$, $a_{56}$, $a_{57}$, $a_{58}$, $a_{59}$, $a_{60}$, and $a_{61}$. The corresponding nine intensities of XIC 220 that are used in calculating a mean at retention time 57 are, for example, $b_{53}$, $b_{54}$, $b_{55}$, $b_{56}$, $b_{57}$, $b_{58}$, $b_{59}$, $b_{60}$, and $b_{61}$ (not shown).

When XIC 220 is subtracted from XIC 210, the mean at retention time 57, $\mu_{57}$, is calculated by subtracting the nine points of XIC 220, $b_{53}$, $b_{54}$, $b_{55}$, $b_{56}$, $b_{57}$, $b_{58}$, $b_{59}$, $b_{60}$, and $b_{61}$ (not shown), from the nine points of XIC 210 according to Equation (1). For example, the mean at retention time 57, $\mu_{57}$, is calculated according to

$$\mu_{57} = \frac{1}{9}\sum_{j=1}^{9}\left(\left(\frac{a_{52+j}}{a_{57}}\right)^{\frac{1}{2}} - \left(\frac{b_{52+j}}{b_{57}}\right)^{\frac{1}{2}}\right),$$

where the midpoint, $m$, of nine points is 5.

Returning to Figure 4, the subtraction curve showing mean values can be used to identify regions where two XICs are similar. In regions where the two XICs are similar, the mean should be close to zero. Plot 400 shows a retention time region 410 near retention time 56 where the mean values are close to zero. As a result, plot 400 suggests that peaks of the two XICs can be grouped in retention time region 410. In plot 400, however, the mean values frequently cross through a value of zero making it somewhat difficult to distinguish similar regions.

In various embodiments, similar regions of XICs can further be distinguished by calculating a subtraction curve showing standard deviation values. Like the mean, $\mu$, the standard deviation, $\sigma$, at each retention time is calculated from an odd number, $N$, of XIC values, $a$ and $b$, in regions of each of the two XICs spanning the retention time. Mathematically, for a retention time, $i + m$, with a number of points, $N$, and having $m$ as the midpoint of $N$ points, the standard deviation is given by Equation (2).

$$\sigma_{i+m} = \sqrt{\sum_{j=1}^{N}\frac{1}{N}\left(\left(\frac{a_{i+j}}{a_{i+m}}\right)^{\frac{1}{2}} - \left(\frac{b_{i+j}}{b_{i+m}}\right)^{\frac{1}{2}} - \mu_{i+m}\right)^2} \qquad (2)$$

Returning to Figure 3, for example, when XIC 320 is subtracted from XIC 310, the square root of the variance at retention time 57, $\sigma_{57}$, is calculated by subtracting the nine points of XIC 320, $b_{53}$, $b_{54}$, $b_{55}$, $b_{56}$, $b_{57}$, $b_{58}$, $b_{59}$, $b_{60}$, and $b_{61}$ (not shown), from the nine points of XIC 310 according to Equation (2). For example, the square root of the variance retention time 57, $\sigma_{57}$, is calculated according to

$$\sigma_{57} = \sqrt{\sum_{j=1}^{9}\frac{1}{9}\left(\left(\frac{a_{52+j}}{a_{57}}\right)^{\frac{1}{2}} - \left(\frac{b_{52+j}}{b_{57}}\right)^{\frac{1}{2}} - \mu_{57}\right)},$$

where the midpoint, $m$, of nine points is 5.

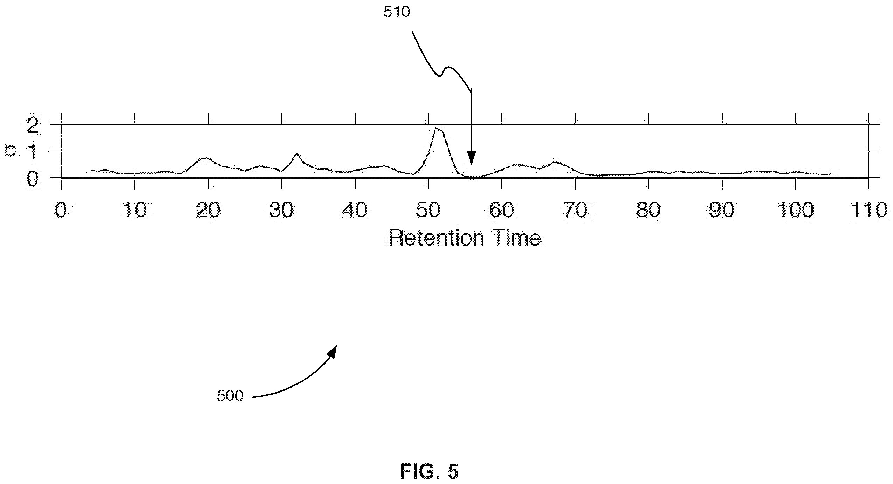

Figure 5 is an exemplary plot 500 of a subtraction curve that shows the standard deviation values calculated from the local subtraction of intensities of two XICs of the XICs shown in Figure 2, in accordance with various embodiments. Plot 500 shows a retention time region 510 near retention time 56 where the values for the square root of the variance are close to zero. As a result, plot 500 suggests that peaks of the two XICs can be grouped in retention time region 510. A comparison of the Figure 5 with Figure 4 shows that similar regions of two XICs are more easily distinguished from the values for the square root of the variance than from mean values.

In various embodiments, for each set of $M$ product ions of the known compound, $\binom{M}{2} = \frac{M!}{2!(M-2)!}$ subtractions of XICs are performed producing $\binom{M}{2}$ subtraction curves. The peaks of the $M$ XICs are then grouped according to the $\binom{M}{2}$ subtraction curves. Retention times of one or more of the $\binom{M}{2}$ subtraction curves are identified that have values that are within a threshold value of zero. In other words, the subtraction curves are examined for locations where the statistical comparison measure approaches zero. For one or more retention times where the statistical comparison measure approaches zero, the two or more XICs used to calculate the one or more subtraction curves identifying the one or more retention times are obtained. A peak group is created from the peaks of the two or more XICs within the one or more retention times.

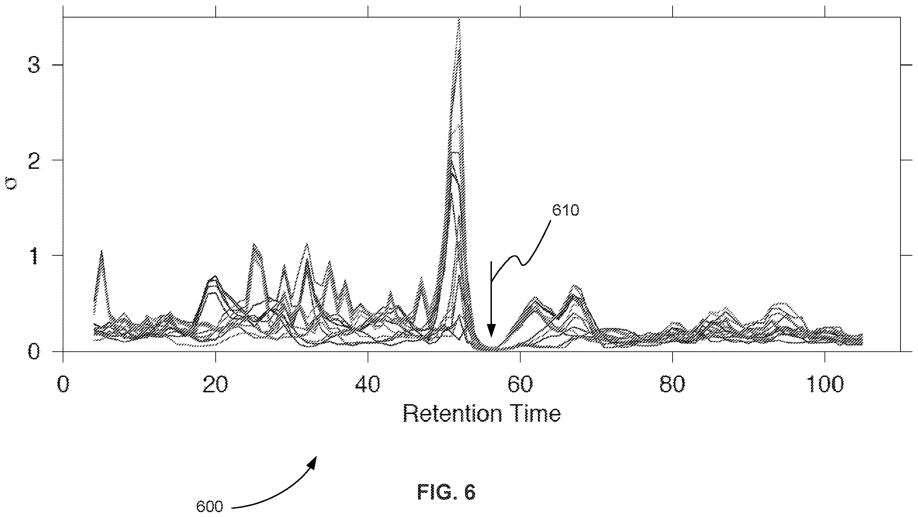

Figure 6 is an exemplary plot 600 of the $\binom{5}{2}$ subtraction curves showing standard deviation values calculated from the five XICs of Figure 2, in accordance with various embodiments. Plot 600 shows that in retention time region 610 near retention time 56 the $\binom{5}{2}$ subtraction curves have a value close to zero. This implies all five XICs have a similar peak shape in retention time region 610.

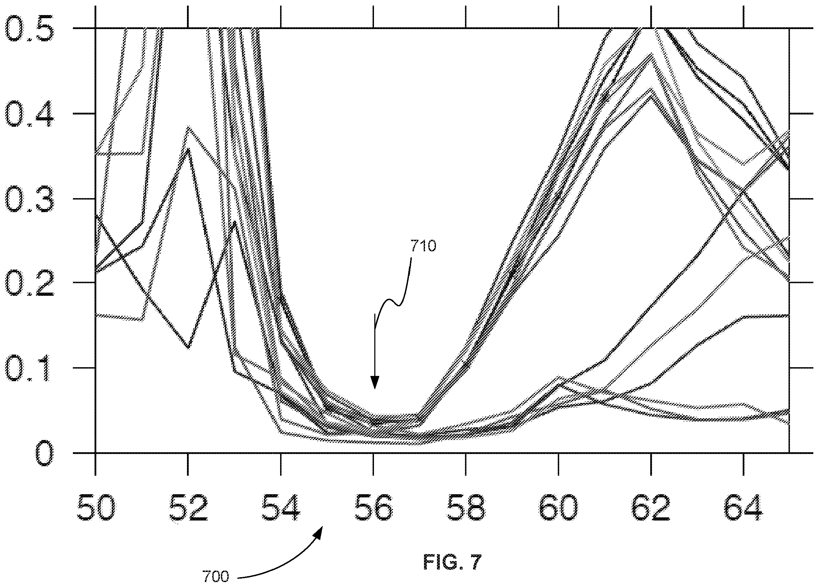

Figure 7 is an exemplary plot 700 of a detailed portion of the $\binom{5}{2}$ subtraction curves showing standard deviation values shown in Figure 6 between retention times 50 and 65, in accordance with various embodiments. Plot 700 show more clearly that the $\binom{5}{2}$ subtraction curves all have a value less than 0.1 in retention time region 710 between retention times 55 and 57. As a result, the peaks of all five XICs in retention time region 710 can be grouped. The peaks of the group can then be scored using criteria similar to the criteria used in the '874 Application. The group with the highest score is then used to identify and/or quantify the known compound.

*System for Grouping XIC Peaks*

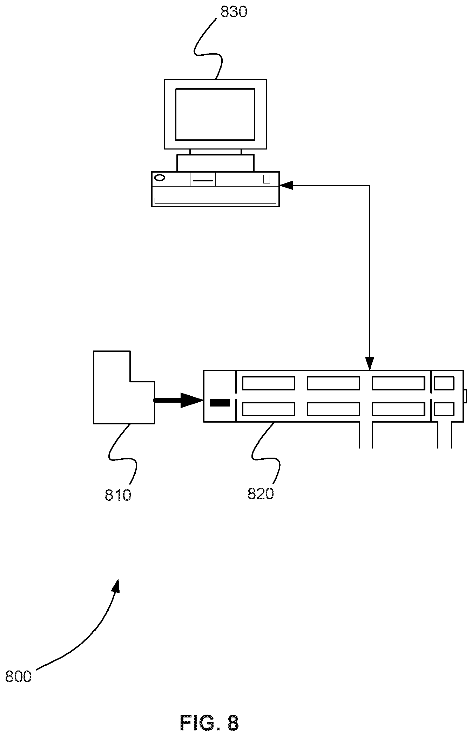

Figure 8 is a schematic diagram showing a system 800 for grouping XIC peaks of two or more product ions of a known compound, in accordance with various embodiments. System 800 includes separation device 810, mass spectrometer 820, and processor 830. Separation device 810 separates a known compound from a sample mixture. Separation device 810 can include, but is not limited to, an electrophoretic device, a chromatographic device, or a mobility device.

Mass spectrometer 820 is a tandem mass spectrometer, for example. Mass spectrometer 820 can include one or more physical mass analyzers that perform two or more mass analyses. A mass analyzer of a tandem mass spectrometer can include, but is not limited to, a time-of-flight (TOF), quadrupole, an ion trap, a linear ion trap, an orbitrap, a magnetic four-sector mass analyzer, a hybrid quadrupole time-of-flight (Q-TOF) mass analyzer, or a Fourier transform mass analyzer. Mass spectrometer 820 can include separate mass spectrometry stages or steps in space or time, respectively.

Mass spectrometer 820 performs at each retention time of a plurality of retention times one or more mass spectrometry/mass spectrometry (MS/MS) scans on the separating sample mixture using one or more sequential mass window widths in order to span an entire mass range, producing a collection of product ion spectra for the entire mass range for the plurality of retention times.

Processor 830 is in communication with Mass spectrometer 820. Processor 830 can also be in communication with separation device 810. Processor 830 can be, but is not limited to, the system of Figure 1, a computer, microprocessor, or any device capable of sending and receiving control signals and data to and from tandem Mass spectrometer 820 and processing data.

Processor 830 receives the collection of product ion spectra for the entire mass range for the plurality of retention times from Mass spectrometer 820. Processor 830 selects $M$ product ions of the known compound. Processor 830Processor 830 calculates an XIC for each of the $M$ product ions from the collection of product ion spectra, producing

$M$ XICs. Processor 830 subtracts each XIC of the $M$ XICs from each of the other $M$ XICs, producing $\binom{M}{2}$ subtraction curves. Each subtraction curve is calculated from a first XIC and a second XIC. At each retention time, the intensity of the first XIC at the retention time and two or more intensities of the first XIC at two or more adjacent retention times are normalized. Similarly, the intensity of the second XIC at the retention time and two or more intensities of the second XIC at the adjacent retention times are normalized. The normalized intensities of the second XIC are subtracted from the corresponding normalized intensities of the first XIC. A statistical measure of the difference intensities is calculated. The statistical measure can include, but is not limited to, a mean, mode, median, variance, or standard deviation of the difference intensities.

Processor 830 identifies one or more regions of one or more retention times where one or more subtraction curves of the $\binom{M}{2}$ subtraction curves have values that are within a threshold value of zero. The threshold can be predetermined or received from a user, for example. For each region of the one or more regions, processor obtains two or more XICs used to calculate the one or more subtraction curves identifying the region and adds each peak of the two or more XICs that is in the region to a peak group.

In various embodiments, at each retention time, $i + m$, Processor 830 calculates a mean, $\mu_{i+m}$, of the difference intensities according to

$$\mu_{i+m} = \frac{1}{N} \sum_{j=1}^{N} \left( \left( \frac{a_{i+j}}{a_{i+m}} \right)^{\frac{1}{2}} - \left( \frac{b_{i+j}}{b_{i+m}} \right)^{\frac{1}{2}} \right),$$

where $N$ is the number of difference intensities calculated at each retention time, $N$ is an odd number, $m$ is the midpoint of $N$, and $\left( \frac{a_{i+j}}{a_{i+m}} \right)^{\frac{1}{2}} - \left( \frac{b_{i+j}}{b_{i+m}} \right)^{\frac{1}{2}}$ for $j = 1$ to $N$ are the difference intensities calculated for retention time $i + m$.

In various embodiments, at each retention time, $i + m$, Processor 830 calculates a standard deviation, $\sigma_{i+m}$, of the difference intensities according to

$$\sigma_{i+m} = \sqrt{\sum_{j=1}^{N} \frac{1}{N} \left( \left( \frac{a_{i+j}}{a_{i+m}} \right)^{\frac{1}{2}} - \left( \frac{b_{i+j}}{b_{i+m}} \right)^{\frac{1}{2}} - \mu_{i+m} \right)^{2}},$$

where $N$ is the number of difference intensities calculated at each retention time, $N$ is an odd number, $m$ is the midpoint of $N$, $\left( \frac{a_{i+j}}{a_{i+m}} \right)^{\frac{1}{2}} - \left( \frac{b_{i+j}}{b_{i+m}} \right)^{\frac{1}{2}}$ for $j = 1$ to $N$ are the difference intensities calculated for retention time $i + m$, and $\mu_{i+m}$ is the mean calculated according to

$$\mu_{i+m} = \frac{1}{N} \sum_{j=1}^{N} \left( \left( \frac{a_{i+j}}{a_{i+m}} \right)^{\frac{1}{2}} - \left( \frac{b_{i+j}}{b_{i+m}} \right)^{\frac{1}{2}} \right).$$

In various embodiments, Processor 830 further scores each peak group of the one or more regions and uses the highest scoring peak group to identify or quantify the known compound.

In various embodiments, Processor 830 analyzes the collection of product ion spectra for peak groups using subtraction curves after the sample mixture is analyzed by Mass spectrometer 820. In other words, XIC peaks of two or more product ions of a known compound are grouped in a post-processing step.

*Method for Grouping XIC Peaks*

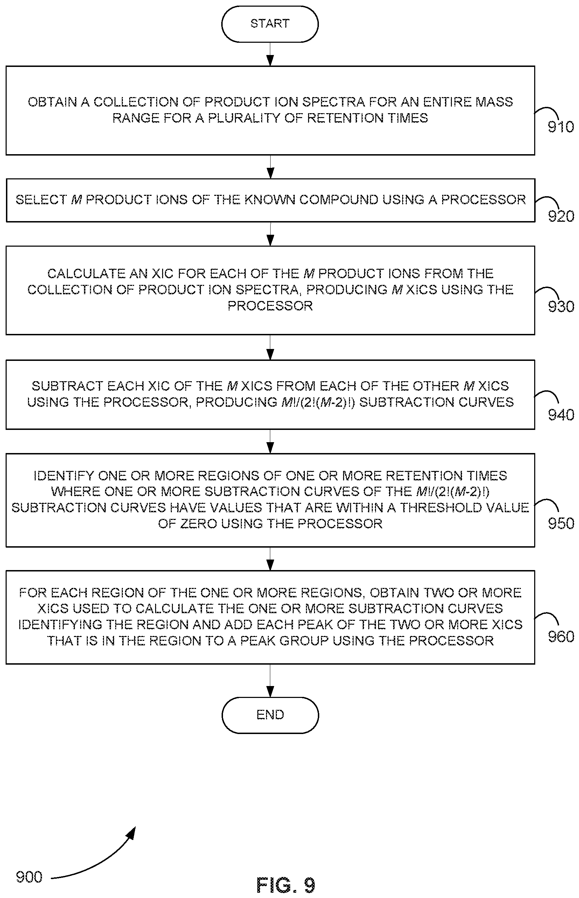

Figure 9 is an exemplary flowchart showing a method 900 for grouping XIC peaks of two or more product ions of a known compound, in accordance with various embodiments.

In step 910 of method 900, a collection of product ion spectra for an entire mass range for a plurality of retention times is obtained. A known compound is separated from a sample mixture using a separation device. One or more mass MS/MS scans are performed on the separating sample mixture at each retention time of a plurality of retention times using one or more sequential precursor ion mass window widths in order to span the entire mass range, producing the collection of product ion spectra for the entire mass range for the plurality of retention times using a mass spectrometer.

In step 920, $M$ product ions of the known compound are selected using a processor.

In step 930, an XIC is calculated for each of the $M$ product ions from the collection of product ion spectra using the processor, producing $M$ XICs.

In step 940, each XIC of the $M$ *XICs* is subtracted from each of the other $M$ XICs using the processor, producing $\binom{M}{2}$ subtraction curves. Each subtraction curve is calculated from a first XIC and a second XIC. At each retention time, the intensity of the first XIC at the retention time and two or more intensities of the first XIC at two or more adjacent retention times are normalized. Similarly, the intensity of the second XIC at the retention time and two or more intensities of the second XIC at the adjacent retention times are normalized. The normalized intensities of the second XIC are subtracted from the corresponding normalized intensities of the first XIC. A statistical measure of the difference intensities is calculated.

In step 950, one or more regions of one or more retention times where one or more subtraction curves of the $\binom{M}{2}$ subtraction curves have values that are within a threshold value of zero are identified using the processor.

In step 960, for each region of the one or more regions, two or more XICs used to calculate the one or more subtraction curves identifying the region are obtained and each peak of the two or more XICs that is in the region is added to a peak group using the processor.

*Computer Program Product for Grouping XIC Peaks*

In various embodiments, a computer program product includes a non-transitory and tangible computer-readable storage medium whose contents include a program with instructions being executed on a processor so as to perform a method for grouping XIC peaks of two or more product ions of a known compound. This method is performed by a system that includes one or more distinct software modules.

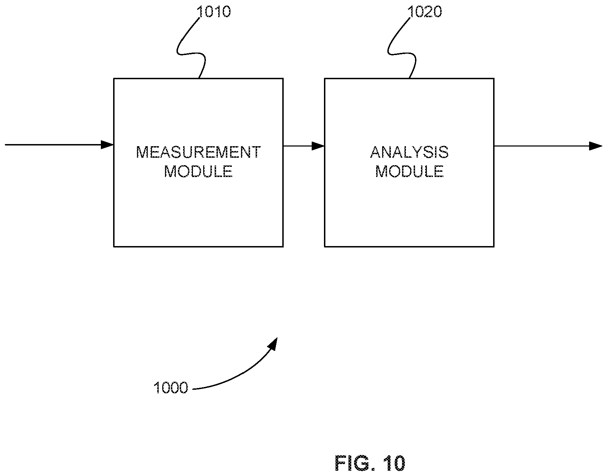

Figure 10 is a schematic diagram of a system 1000 that includes one or more distinct software modules that perform a method for grouping XIC peaks of two or more product ions of a known compound, in accordance with various embodiments. System 1000 includes measurement module 1010 and analysis module 1020.

Measurement module 1010 obtains a collection of product ion spectra for an entire mass range for a plurality of retention times. A known compound is separated from a sample mixture using a separation device. One or more mass MS/MS scans are performed on the separating sample mixture at each retention time of a plurality of retention times using one or more sequential precursor ion mass window widths in order to span the entire mass range, producing the collection of product ion spectra for the entire mass range for the plurality of retention times using a mass spectrometer.

Analysis module 1020 selects $M$ product ions of the known compound. Analysis module 1020 calculates an XIC for each of the $M$ product ions from the collection of product ion spectra, producing $M$ XICs.

Analysis module 1020 subtracts each XIC of the $M$ XICs from each of the other $M$ XICs, producing $\binom{M}{2}$ subtraction curves. Each subtraction curve is calculated from a first XIC and a second XIC. At each retention time, the intensity of the first XIC at the retention time and two or more intensities of the first XIC at two or more adjacent retention times are normalized. Similarly, the intensity of the second XIC at the retention time and two or more intensities of the second XIC at the adjacent retention times are normalized. The normalized intensities of the second XIC are subtracted from the corresponding normalized intensities of the first XIC. A statistical measure of the difference intensities is calculated.

Analysis module 1020 identifies one or more regions of one or more retention times where one or more subtraction curves of the $\binom{M}{2}$ subtraction curves have values that are within a threshold value of zero. For each region of the one or more regions, analysis module 1020 obtains two or more XICs used to calculate the one or more subtraction curves identifying the region and adds each peak of the two or more XICs that is in the region to a peak group.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the scope of the various embodiments.

**Claims**

1.  A system for grouping extracted ion chromatogram (XIC) peaks of two or more product ions of a known compound, comprising:

    a separation device that separates a known compound from a sample mixture;
    a mass spectrometer that performs at each retention time of a plurality of retention times one or more mass spectrometry/mass spectrometry (MS/MS) scans on the separating sample mixture using one or more sequential mass window widths in order to span an entire mass range, producing a collection of product ion spectra for the entire mass range for the plurality of retention times; and
    a processor configured to:

    receive the collection of product ion spectra for the entire mass range for the plurality of retention times,
    select $M$ product ions of the known compound,
    calculate an XIC for each of the $M$ product ions from the collection of product ion spectra, producing $M$ XICs,
    subtract each XIC of the $M$ XICs from each of the other $M$ XICs, producing $\binom{M}{2}$ subtraction curves, wherein each subtraction curve is calculated from a first XIC and a second XIC by, at each retention time, normalizing an intensity of the first XIC at the each retention time and two or more intensities of the first XIC at two or more adjacent retention times, normalizing an intensity of the second XIC at the each retention time and two or more intensities of the second XIC at the adjacent retention times, subtracting the normalized intensities of the second XIC from the corresponding normalized intensities of the first XIC, and calculating a statistical measure of the difference intensities,
    identify one or more regions of one or more retention times where one or more subtraction curves of the $\binom{M}{2}$ subtraction curves have values that are within a threshold value of zero, and
    for each region of the one or more regions, obtain two or more XICs used to calculate the one or more subtraction curves identifying the region and adds each peak of the two or more XICs that is in the region to a peak group.

2.  The system of claim 1, wherein calculating a statistical measure of the difference intensities comprises calculating a mean of the difference intensities.

3.  The system of claim 2, wherein the mean, $\mu_{i+m}$, of the difference intensities calculated for retention time $i + m$ is calculated according to

$$\mu_{i+m} = \frac{1}{N} \sum_{j=1}^{N} \left( \left(\frac{a_{i+j}}{a_{i+m}}\right)^{\frac{1}{2}} - \left(\frac{b_{i+j}}{b_{i+m}}\right)^{\frac{1}{2}} \right),$$

where $N$ is the number of difference intensities calculated at each retention time, $N$ is an odd number, $m$ is the midpoint of $N$, and $\left(\frac{a_{i+j}}{a_{i+m}}\right)^{\frac{1}{2}} - \left(\frac{b_{i+j}}{b_{i+m}}\right)^{\frac{1}{2}}$ for $j = 1$ to $N$ are the difference intensities calculated for retention time $i + m$.

4.  The system of claim 1, wherein calculating a statistical measure of the difference intensities comprises calculating a standard deviation of the difference intensities.

5. The system of claim 4, wherein the standard deviation, $\sigma_{i+m}$, of the difference intensities calculated for retention time, $i + m$, is calculated according to

$$\sigma_{i+m} = \sqrt{\sum_{j=1}^{N} \frac{1}{N}\left(\left(\frac{a_{i+j}}{a_{i+m}}\right)^{\frac{1}{2}} - \left(\frac{b_{i+j}}{b_{i+m}}\right)^{\frac{1}{2}} - \mu_{i+m}\right)^2},$$

where $N$ is the number of difference intensities calculated at each retention time, $N$ is an odd number, $m$ is the midpoint of $N$, $\left(\frac{a_{i+j}}{a_{i+m}}\right)^{\frac{1}{2}} - \left(\frac{b_{i+j}}{b_{i+m}}\right)^{\frac{1}{2}}$ for $j = 1$ to $N$ are the difference intensities calculated for retention time, $i + m$, and $\mu_{i+m}$ is the mean calculated according to

$$\mu_{i+m} = \frac{1}{N}\sum_{j=1}^{N}\left(\left(\frac{a_{i+j}}{a_{i+m}}\right)^{\frac{1}{2}} - \left(\frac{b_{i+j}}{b_{i+m}}\right)^{\frac{1}{2}}\right).$$

6. The system of claim 1, wherein calculating a statistical measure of the difference intensities comprises calculating one of the median, mode, or variance of the difference intensities.

7. The system of claim 1, wherein the processor further scores each peak group of the one or more regions and uses the highest scoring peak group to identify or quantify the known compound.

8. A method for grouping extracted ion chromatogram (XIC) peaks of two or more product ions of a known compound, comprising:

obtaining a collection of product ion spectra for an entire mass range for a plurality of retention times, wherein a known compound is separated from a sample mixture using a separation device and wherein one or more mass spectrometry/mass spectrometry (MS/MS) scans are performed on the separating sample mixture at each retention time of a plurality of retention times using one or more sequential precursor ion mass window widths in order to span the entire mass range, producing the collection of product ion spectra for the entire mass range for the plurality of retention times using a mass spectrometer;
selecting $M$ product ions of the known compound using a processor;
calculating an XIC for each of the $M$ product ions from the collection of product ion spectra using the processor, producing $M$ XICs;

subtracting each XIC of the $M$ XICs from each of the other $M$ XICs using the processor, producing $\binom{M}{2}$ subtraction curves, wherein each subtraction curve is calculated from a first XIC and a second XIC by, at each retention time, normalizing an intensity of the first XIC at the each retention time and two or more intensities of the first XIC at two or more adjacent retention times, normalizing an intensity of the second XIC at the each retention time and two or more intensities of the second XIC at the adjacent retention times, subtracting the normalized intensities of the second XIC from the corresponding normalized intensities of the first XIC, and calculating a statistical measure of the difference intensities;
identifying one or more regions of one or more retention times where one or more subtraction curves of the $\binom{M}{2}$ subtraction curves have values that are within a threshold value of zero using the processor; and
for each region of the one or more regions, obtaining two or more XICs used to calculate the one or more subtraction curves identifying the region and adding each peak of the two or more XICs that is in the region to a peak group using the processor.

9. The method of claim 8, wherein calculating a statistical measure of the difference intensities comprises calculating a mean of the difference intensities.

**10.** The method of claim 9, wherein the mean, $\mu_{i+m}$, of the difference intensities calculated for retention time, $i + m$, is calculated according to

$$\mu_{i+m} = \frac{1}{N}\sum_{j=1}^{N}\left(\left(\frac{a_{i+j}}{a_{i+m}}\right)^{\frac{1}{2}} - \left(\frac{b_{i+j}}{b_{i+m}}\right)^{\frac{1}{2}}\right),$$

where $N$ is the number of difference intensities calculated at each retention time, $N$ is an odd number, $m$ is the midpoint of $N$, and $\left(\frac{a_{i+j}}{a_{i+m}}\right)^{\frac{1}{2}} - \left(\frac{b_{i+j}}{b_{i+m}}\right)^{\frac{1}{2}}$ for $j = 1$ to $N$ are the difference intensities calculated for retention time $i + m$.

**11.** The method of claim 8, wherein calculating a statistical measure of the difference intensities comprises calculating a standard deviation of the difference intensities.

**12.** The method of claim 11, wherein the standard deviation, $\sigma_{i+m}$, of the difference intensities calculated for retention time, $i + m$, is calculated according to

$$\sigma_{i+m} = \sqrt{\sum_{j=1}^{N}\frac{1}{N}\left(\left(\frac{a_{i+j}}{a_{i+m}}\right)^{\frac{1}{2}} - \left(\frac{b_{i+j}}{b_{i+m}}\right)^{\frac{1}{2}} - \mu_{i+m}\right)^{2}},$$

where $N$ is the number of difference intensities calculated at each retention time, $N$ is an odd number, $m$ is the midpoint of $N$, $\left(\frac{a_{i+j}}{a_{i+m}}\right)^{\frac{1}{2}} - \left(\frac{b_{i+j}}{b_{i+m}}\right)^{\frac{1}{2}}$ for $j = 1$ to $N$ are the difference intensities calculated for retention time $i + m$, and $\mu_{i+m}$ is the mean calculated according to

$$\mu_{i+m} = \frac{1}{N}\sum_{j=1}^{N}\left(\left(\frac{a_{i+j}}{a_{i+m}}\right)^{\frac{1}{2}} - \left(\frac{b_{i+j}}{b_{i+m}}\right)^{\frac{1}{2}}\right).$$

**13.** The method of claim 8, wherein calculating a statistical measure of the difference intensities comprises calculating one of the median, mode, or variance of the difference intensities.

**14.** The method of claim 8, further comprising scoring each peak group of the one or more regions and using the highest scoring peak group to identify or quantify the known compound using the processor.

**15.** A computer program product, comprising a non-transitory and tangible computer-readable storage medium whose contents include a program with instructions being executed on a processor so as to perform a method for grouping extracted ion chromatogram (XIC) peaks of two or more product ions of a known compound, the method comprising:

providing a system, wherein the system comprises one or more distinct software modules, and wherein the distinct software modules comprise a measurement module and an analysis module;
obtaining a collection of product ion spectra for an entire mass range for a plurality of retention times using the measurement module, wherein a known compound is separated from a sample mixture using a separation device and wherein one or more mass spectrometry/mass spectrometry (MS/MS) scans are performed on the separating sample mixture at each retention time of a plurality of retention times using one or more sequential precursor ion mass window widths in order to span the entire mass range, producing the collection of product ion spectra for the entire mass range for the plurality of retention times using a mass spectrometer;
selecting $M$ product ions of the known compound using a analysis module;
calculating an XIC for each of the $M$ product ions from the collection of product ion spectra using the analysis module, producing $M$ XICs;

subtracting each XIC of the $M$ XICs from each of the other $M$ XICs using the analysis module, producing $\binom{M}{2}$ subtraction curves, wherein each subtraction curve is calculated from a first XIC and a second XIC by, at each retention time, normalizing an intensity of the first XIC at the each retention time and two or more intensities of the first XIC at two or more adjacent retention times, normalizing an intensity of the second XIC at the each retention time and two or more intensities of the second XIC at the adjacent retention times, subtracting the normalized intensities of the second XIC from the corresponding normalized intensities of the first XIC, and calculating a statistical measure of the difference intensities;
identifying one or more regions of one or more retention times where one or more subtraction curves of the $\binom{M}{2}$ subtraction curves have values that are within a threshold value of zero using the analysis module; and
for each region of the one or more regions, obtaining two or more XICs used to calculate the one or more subtraction curves identifying the region and adding each peak of the two or more XICs that is in the region to a peak group using the analysis module.

**Patentansprüche**

1. System zum Gruppieren von Peaks eines extrahierten Ionenchromatogramms (XIC) von zwei oder mehreren Produktionen einer bekannten Verbindung, umfassend:

   eine Trennvorrichtung, die eine bekannte Verbindung von einem Probengemisch trennt;
   ein Massenspektrometer, das zu jeder Verweilzeit eine Vielzahl von Verweilzeiten einen oder mehrere Massenspektrometrie-/Massenspektrometrie (MS/MS)-Scans auf der trennenden Probenmischung unter Verwendung einer oder mehrerer aufeinanderfolgender Massenfensterbreiten durchführt, um einen gesamten Massenbereich zu überspannen, was eine Sammlung von Produktionenspektren für den gesamten Massenbereich für die Vielzahl von Verweilzeiten erzeugt; und
   einen Prozessor, der konfiguriert ist, um:

   die Sammlung von Produktionenspektren für den gesamten Massenbereich für die Vielzahl von Verweilzeiten zu empfangen,
   $M$ Produktionen der bekannten Verbindung auszuwählen,
   ein XIC für jedes der $M$ Produktionen aus der Sammlung der Produktionenspektren zu berechnen, was $M$ XICs erzeugt,

   jedes XIC der $M$ XICs von jedem der anderen $M$ XICs zu subtrahieren, was $\binom{M}{2}$ Subtraktionskurven erzeugt, wbei jede Subtraktionskurve aus einem ersten XIC und einem zweiten XIC berechnet wird, indem, zu jeder Verweilzeit, eine Intensität des ersten XICs zu jeder Verweilzeit und zwei oder mehrere Intensitäten des ersten XICs zu zwei oder mehreren benachbarten Verweilzeiten normalisiert werden, eine Intensität des zweiten XICs zu jeder Verweilzeit und zwei oder mehrere Intensitäten des zweiten XICs zu den benachbarten Verweilzeiten normalisiert werden, die normalisierten Intensitäten des zweiten XICs von den entsprechenden normalisierten Intensitäten des ersten XICs subtrahiert werden, und ein statistisches Maß der Differenzintensitäten berechnet wird,
   einen oder mehrere Bereiche von einer oder mehreren Verweilzeiten zu identifizieren, wobei eine oder mehrere Subtraktionskurven der $\binom{M}{2}$ Subtraktionskurven Werte haben, die innerhalb eines Schwellenwerts von Null liegen, und
   für jeden Bereich des einen oder mehrerer Bereiche, zwei oder mehrere XICs zu erhalten, die zum Berechnen der einen oder mehreren Subtraktionskurven verwendet werden, die die Bereiche identifizieren, und jeden Peak der zwei oder mehreren XICs, die sich in dem Bereich befinden, zu einer Peakgruppe zu addieren.

2. System nach Anspruch 1, wobei Berechnen eines statistischen Maßes der Differenzintensitäten Berechnen eines Mittelwerts der Differenzintensitäten umfasst.

3. System nach Anspruch 2, wobei der Mittelwert $u_i + m$ der für die Verweilzeit $i + m$ berechneten Differenzintensitäten gemäß

$$\mu_{i+m} = \frac{1}{N}\sum_{j=1}^{N}\left(\left(\frac{a_{i+j}}{a_{i+m}}\right)^{\frac{1}{2}} - \left(\frac{b_{i+j}}{b_{i+m}}\right)^{\frac{1}{2}}\right),$$

berechnet wird, wobei $N$ die Anzahl von Differenzintensitäten ist, die zu jeder Verweilzeit berechnet wird, $N$ eine ungerade Zahl ist, $m$ der Mittelpunkt von $N$ ist, und

$$\left(\frac{a_{i+j}}{a_{i+m}}\right)^{\frac{1}{2}} - \left(\frac{b_{i+j}}{b_{i+m}}\right)^{\frac{1}{2}}$$ für $j$ = 1 bis $N$ die Differenzintensitäten sind, die für die Verweilzeit $i + m$ berechnet werden.

4. System nach Anspruch 1, wobei Berechnen eines statistischen Maßes der Differenzintensitäten Berechnen einer Standardabweichung der Differenzintensitäten umfasst.

5. System nach Anspruch 4, wobei die Standardabweichung $\sigma_{i+m}$ der Differenzintensitäten, die für die Verweilzeit $i$ + $m$ berechnet wurden, gemäß

$$\sigma_{i+m} = \sqrt{\sum_{j=1}^{N}\frac{1}{N}\left(\left(\frac{a_{i+j}}{a_{i+m}}\right)^{\frac{1}{2}} - \left(\frac{b_{i+j}}{b_{i+m}}\right)^{\frac{1}{2}} - \mu_{i+m}\right)^{2}},$$

berechnet wird, wobei $N$ die Anzahl von Differenzintensitäten ist, die zu jeder Verweilzeit berechnet wird, $N$ eine ungerade Zahl ist, $m$ der Mittelpunkt von $N$ ist, $\left(\frac{a_{i+j}}{a_{i+m}}\right)^{\frac{1}{2}} - \left(\frac{b_{i+j}}{b_{i+m}}\right)^{\frac{1}{2}}$ für $j$ = 1 bis $N$ die Differenzintensitäten sind, die für die Verweilzeit $i + m$ berechnet werden, und $\mu_{i+m}$ der Mittelwert berechnet gemäß

$$\mu_{i+m} = \frac{1}{N}\sum_{j=1}^{N}\left(\left(\frac{a_{i+j}}{a_{i+m}}\right)^{\frac{1}{2}} - \left(\frac{b_{i+j}}{b_{i+m}}\right)^{\frac{1}{2}}\right)$$

ist.

6. System nach Anspruch 1, wobei Berechnen eines statistischen Maßes der Differenzintensitäten Berechnen eines des Medians, Modus oder Varianz der Differenzintensitäten umfasst.

7. System nach Anspruch 1, wobei der Prozessor ferner jede Peakgruppe des einen oder mehreren Bereiche bewertet und die Peakgruppe mit der höchsten Bewertung verwendet, um die bekannte Verbindung zu identifizieren oder zu quantifizieren.

8. Verfahren zum Gruppieren von Peaks eines extrahierten Ionenchromatogramms (XIC) von zwei oder mehr Produktionen einer bekannten Verbindung, umfassend:

Erhalten einer Sammlung von Produktionenspektren für einen gesamten Massenbereich für eine Vielzahl von Verweilzeiten, wobei eine bekannte Verbindung unter Verwendung einer Trennvorrichtung von einem Probengemisch getrennt wird und wobei ein oder mehrere Massenspektrometrie-/Massenspektrometrie-(MS/MS)Scans auf der trennenden Probenmischung zu jeder Verweilzeit einer Vielzahl von Verweilzeiten unter Verwendung einer oder mehrerer aufeinanderfolgender Vorläuferionen-Massenfensterbreiten durchgeführt wird, um den gesamten Massenbereich zu überspannen, was die Sammlung von Produktionenspektren für den gesamten Massenbereich für die Vielzahl der Verweilzeiten unter Verwendung eines Massenspektrometers erzeugt;
Auswählen von $M$ Produktionen der bekannten Verbindung unter Verwendung eines Prozessors;
Berechnen eines XICs für jedes der $M$ Produktionen aus der Sammlung von Produktionenspektren unter Ver-

wendung des Prozessors, wobei M XICs erzeugt werden;
Subtrahieren jedes XIC der M XICs von jedem der anderen M XICs unter Verwendung des Prozessors, was $\binom{M}{2}$ Subtraktionskurven erzeugt, wobei jede Subtraktionskurve aus einem ersten XIC und einem zweiten XIC berechnet wird, indem, zu jeder Verweilzeit, eine Intensität des ersten XICs zu jeder Verweilzeit und zwei oder mehr Intensitäten des ersten XICs zu zwei oder mehr benachbarten Verweilzeiten normalisiert werden, eine Intensität des zweiten XICs zu jeder Verweilzeit und zwei oder mehr Intensitäten des zweiten XICs zu den benachbarten Verweilzeiten normalisiert werden, die normalisierten Intensitäten des zweiten XICs von den entsprechenden normalisierten Intensitäten des ersten XICs subtrahiert werden, und eines statistisches Maß der Differenzintensitäten berechnet wird,
Identifizieren eines oder mehrerer Bereiche von einer oder mehreren Verweilzeiten, wobei eine oder mehrere Subtraktionskurven der $\binom{M}{2}$ Subtraktionskurven Werte haben, die innerhalb eines Schwellenwerts von Null liegen, unter Verwendung des Prozessors; und
für jeden Bereich des einen oder mehreren Bereiche, Erhalten von zwei oder mehreren XICs, die zum Berechnen der einen oder mehreren Subtraktionskurven verwendet werden, die die Bereiche identifizieren, und Addieren jedes Peaks der zwei oder mehreren XICs, die sich in dem Bereich befinden, zu einer Peakgruppe unter Verwendung des Prozessors.

9. Verfahren nach Anspruch 8, wobei Berechnen eines statistischen Maßes der Differenzintensitäten Berechnen eines Mittelwerts der Differenzintensitäten umfasst.

10. Verfahren nach Anspruch 9, wobei der Mittelwert $ui + m$ der für die Verweilzeit berechneten Differenzintensitäten $i + m$ gemäß

$$\mu_{i+m} = \frac{1}{N}\sum_{j=1}^{N}\left(\left(\frac{a_{i+j}}{a_{i+m}}\right)^{\frac{1}{2}} - \left(\frac{b_{i+j}}{b_{i+m}}\right)^{\frac{1}{2}}\right),$$

berechnet wird, wobei $N$ die Anzahl von Differenzintensitäten ist, die zu jeder Verweilzeit berechnet wird, $N$ eine ungerade Zahl ist, $m$ der Mittelpunkt von $N$ ist, und $\left(\frac{a_{i+j}}{a_{i+m}}\right)^{\frac{1}{2}} - \left(\frac{b_{i+j}}{b_{i+m}}\right)^{\frac{1}{2}}$ für $j = 1$ bis $N$ die Differenzintensitäten sind, die für die Verweilzeit $i + m$ berechnet werden.

11. Verfahren nach Anspruch 8, wobei Berechnen eines statistischen Maßes der Differenzintensitäten Berechnen einer Standardabweichung der Differenzintensitäten umfasst.

12. Verfahren nach Anspruch 11, wobei die Standardabweichung $\sigma i + m$ der Differenzintensitäten, die für die Verweilzeit $i + m$ berechnet wurden, gemäß

$$\sigma_{i+m} = \sqrt{\sum_{j=1}^{N}\frac{1}{N}\left(\left(\frac{a_{i+j}}{a_{i+m}}\right)^{\frac{1}{2}} - \left(\frac{b_{i+j}}{b_{i+m}}\right)^{\frac{1}{2}} - \mu_{i+m}\right)^{2}},$$

berechnet wird, wobei $N$ die Anzahl von Differenzintensitäten ist, die zu jeder Verweilzeit berechnet wird, $N$ eine ungerade Zahl ist, $m$ der Mittelpunkt von $N$ ist, $\left(\frac{a_{i+j}}{a_{i+m}}\right)^{\frac{1}{2}} - \left(\frac{b_{i+j}}{b_{i+m}}\right)^{\frac{1}{2}}$ für $j = 1$ bis $N$ die Differenzintensitäten sind, die für die Verweilzeit $i + m$ berechnet werden, und $\mu_{i+m}$ der Mittelwert berechnet gemäß

$$\mu_{i+m} = \frac{1}{N} \sum_{j=1}^{N} \left( \left( \frac{a_{i+j}}{a_{i+m}} \right)^{\frac{1}{2}} - \left( \frac{b_{i+j}}{b_{i+m}} \right)^{\frac{1}{2}} \right)$$

ist.

**13.** Verfahren nach Anspruch 8, wobei Berechnen eines statistischen Maßes der Differenzintensitäten Berechnen eines des Medians, Modus oder Varianz der Differenzintensitäten umfasst.

**14.** Verfahren nach Anspruch 8, ferner umfassend das Bewerten jeder Peakgruppe der einen oder mehreren Bereiche und Verwenden der Peakgruppe mit der höchsten Bewertung, um die bekannte Verbindung unter Verwendung des Prozessors zu identifizieren oder zu quantifizieren.

**15.** Computerprogrammprodukt, umfassend ein nichtflüchtiges und materielles computerlesbares Speichermedium, dessen Inhalte ein Programm mit Anweisungen beinhalten, die auf einem Prozessor ausgeführt werden, um ein Verfahren zum Gruppieren von extrahierten Ionenchromatogramm (XIC)- Peaks von zwei oder mehreren Produktionen einer bekannten Verbindung durchzuführen, das Verfahren umfassend:

Bereitstellen eines Systems, wobei das System ein oder mehrere eindeutige Softwaremodule umfasst, und wobei die eindeutigen Softwaremodule ein Messungsmodul und ein Analysemodul umfassen;
Erhalten einer Sammlung von Produktionenspektren für einen gesamten Massenbereich für eine Vielzahl von Verweilzeiten unter Verwendung des Messungsmoduls, wobei eine bekannte Verbindung unter Verwendung einer Trennvorrichtung von einem Probengemisch getrennt wird und wobei ein oder mehrere Massenspektrometrie-/Massenspektrometrie- (MS/MS)Scans auf der trennenden Probenmischung zu jeder Verweilzeit einer Vielzahl von Verweilzeiten unter Verwendung einer oder mehrerer aufeinanderfolgender Vorläuferionen-Massenfensterbreiten durchgeführt wird, um den gesamten Massenbereich zu überspannen, was die Sammlung von Produktionenspektren für den gesamten Massenbereich für die Vielzahl der Verweilzeiten unter Verwendung eines Massenspektrometers erzeugt;
Auswählen von M Produktionen der bekannten Verbindung unter Verwendung eines Analysemoduls;
Berechnen eines XIC für jedes der M Produktionen aus der Sammlung von Produktionenspektren unter Verwendung des Analysemoduls, wobei MXICs erzeugt werden;
Subtrahieren jedes XIC der M XICs von jedem der anderen M XICs unter Verwendung des Analysemoduls, was $\binom{M}{2}$ Subtraktionskurven erzeugt, wobei jede Subtraktionskurve aus einem ersten XIC und einem zweiten XIC berechnet wird, indem, zu jeder Verweilzeit, eine Intensität des ersten XICs zu jeder Verweilzeit und zwei oder mehr Intensitäten des ersten XICs zu zwei oder mehr benachbarten Verweilzeiten normalisiert werden, eine Intensität des zweiten XICs zu jeder Verweilzeit und zwei oder mehr Intensitäten des zweiten XICs zu den benachbarten Verweilzeiten normalisiert werden, die normalisierten Intensitäten des zweiten XICs von den entsprechenden normalisierten Intensitäten des ersten XICs subtrahiert werden, und eines statistisches Maß der Differenzintensitäten berechnet wird;
Identifizieren eines oder mehrerer Bereiche von einer oder mehreren Verweilzeiten, wobei eine oder mehrere Subtraktionskurven der $\binom{M}{2}$ Subtraktionskurven Werte haben, die innerhalb eines Schwellenwerts von Null liegen unter Verwendung des Analysemoduls; und
für jeden Bereich des einen oder mehreren Bereiche, Erhalten von zwei oder mehreren XICs, die zum Berechnen der einen oder mehreren Subtraktionskurven verwendet werden, die die Bereiche identifizieren, und Addieren jedes Peaks der zwei oder mehreren XICs, die sich in dem Bereich befinden, zu einer Peakgruppe unter Verwendung des Analysemoduls.

**Revendications**

**1.** Système de regroupement de crêtes de chromatogrammes d'ions extraits (XIC) d'au moins deux ions produits d'un composé inconnu, comprenant :

un dispositif de séparation qui sépare un composé connu d'un mélange échantillon ;
un spectromètre de masse qui effectue à chaque temps de rétention d'une pluralité de temps de rétention au moins un balayage de spectrométrie de masse / spectrométrie de masse (SM/SM) sur le mélange échantillon de séparation à l'aide d'au moins une largeur de fenêtre de masse séquentielle afin de couvrir une plage de masse entière, produisant une collection de spectres d'ions produits pour la plage de masse entière pour la pluralité de temps de rétention ; et
un processeur conçu pour :

recevoir la collection de spectres d'ions produits pour la plage de masse entière pour la pluralité de temps de rétention,
sélectionner M ions produits du composé connu,
calculer un XIC pour chacun des M ions produits à partir de la collection de spectres d'ions produits, produisant M XIC,

soustraire chaque XIC des *M* XIC de chacun des autres *M* XIC, produisant $\binom{M}{2}$ courbes de soustraction, chaque courbe de soustraction étant calculée à partir d'un premier XIC et d'un deuxième XIC par, à chaque temps de rétention, la normalisation d'une intensité du premier XIC à chaque temps de rétention et d'au moins deux intensités du premier XIC à au moins deux temps de rétention adjacents, la normalisation d'une intensité du deuxième XIC à chaque temps de rétention et d'au moins deux intensités du deuxième XIC aux temps de rétention adjacents, la soustraction des intensités normalisées du deuxième XIC des intensités normalisées correspondantes du premier XIC, et calcul d'une mesure statistique des intensités de différence,
identifier au moins une région d'au moins un temps de rétention là où au moins une courbe de soustraction des $\binom{M}{2}$ courbes de soustraction présente des valeurs qui se situent dans la limite d'une valeur seuil de zéro, et
pour chaque région de l'au moins une région, obtenir au moins deux XIC utilisés pour calculer l'au moins une courbe de soustraction identifiant la région et ajouter chaque crête des au moins deux XIC qui se situe dans la région à un groupe de crêtes.

2. Système selon la revendication 1, dans lequel le calcul d'une mesure statistique des intensités de différence comprend le calcul d'une moyenne des intensités de différence.

3. Système selon la revendication 2, dans lequel la moyenne, $\mu_{i+m}$, des intensités de différence calculées pour chaque temps de rétention $i + m$ est calculée en fonction de

$$\mu_{i+m} = \frac{1}{N} \sum_{j=1}^{N} \left( \left( \frac{a_{i+j}}{a_{i+m}} \right)^{\frac{1}{2}} - \left( \frac{b_{i+j}}{b_{i+m}} \right)^{\frac{1}{2}} \right),$$

où $N$ est le nombre d'intensités de différence calculées à chaque temps de rétention, $N$ est un nombre impair, $m$ est le point médian de $N$, et $\left( \frac{a_{i+j}}{a_{i+m}} \right)^{\frac{1}{2}} - \left( \frac{b_{i+j}}{b_{i+m}} \right)^{\frac{1}{2}}$ pour j = 1 à $N$ sont les intensités de différence calculées pour le temps de rétention $i + m$.

4. Système selon la revendication 1, dans lequel le calcul d'une mesure statistique des intensités de différence comprend le calcul d'un écart-type des intensités de différence.

5. Système selon la revendication 4, dans lequel l'écart-type, $\sigma_{i+m}$, des intensités de différence calculées pour le temps de rétention $i + m$ est calculé en fonction de

$$\sigma_{i+m} = \sqrt{\sum_{j=1}^{N} \frac{1}{N} \left( \left( \frac{a_{i+j}}{a_{i+m}} \right)^{\frac{1}{2}} - \left( \frac{b_{i+j}}{b_{i+m}} \right)^{\frac{1}{2}} - \mu_{i+m} \right)^2},$$

où $N$ est le nombre d'intensités de différence calculées à chaque temps de rétention, $N$ est un nombre impair, $m$ est le point médian de $N$, $\left( \frac{a_{i+j}}{a_{i+m}} \right)^{\frac{1}{2}} - \left( \frac{b_{i+j}}{b_{i+m}} \right)^{\frac{1}{2}}$ pour $j = 1$ à $N$ sont les intensités de différence calculées pour un temps de rétention, $i + m$, et $u_{i+m}$ est la moyenne calculée en fonction de

$$\mu_{i+m} = \frac{1}{N} \sum_{j=1}^{N} \left( \left( \frac{a_{i+j}}{a_{i+m}} \right)^{\frac{1}{2}} - \left( \frac{b_{i+j}}{b_{i+m}} \right)^{\frac{1}{2}} \right).$$

6. Système selon la revendication 1, dans lequel le calcul d'une mesure statistique des intensités de différence comprend le calcul de la moyenne, du mode ou d'un écart des intensités de différence.

7. Système selon la revendication 1, dans lequel le processeur note en outre chaque groupe de crêtes de l'au moins une région et utilise le groupe de crêtes au plus haut score pour identifier ou quantifier le composé connu.

8. Système de regroupement de crêtes de chromatogrammes d'ions extraits (XIC) d'au moins deux ions produits d'un composé inconnu, comprenant :

l'obtention d'une collection de spectres d'ions produits pour une plage de masse entière pour une pluralité de temps de rétention, un composé connu étant séparé d'un mélange échantillon à l'aide d'un dispositif de séparation et au moins un balayage de spectrométrie de masse / spectrométrie de masse (SM/SM) étant effectué sur le mélange échantillon de séparation à chaque temps de rétention d'une pluralité de temps de rétention à l'aide d'au moins une largeur de fenêtre de masse séquentielle d'ions précurseurs afin de couvrir la plage de masse entière, produisant la collection de spectres d'ions produits pour la plage de masse entière pour la pluralité de temps de rétention à l'aide d'un spectromètre de masse ;
la sélection de $M$ ions produits du composé connu à l'aide d'un processeur ;
le calcul d'un XIC pour chacun des $M$ ions produits à partir de la collection de spectres d'ions produits à l'aide du processeur, produisant $M$ XIC ;

la soustraction de chaque XIC des $M$ XIC de chacun des autres $M$ XIC à l'aide du processeur, produisant $\binom{M}{2}$ courbes de soustraction, chaque courbe de soustraction étant calculée à partir d'un premier XIC et d'un deuxième XIC par, à chaque temps de rétention, la normalisation d'une intensité du premier XIC à chaque dit temps de rétention et d'au moins deux intensités du premier XIC à au moins deux temps de rétention adjacents, la normalisation d'une intensité du deuxième XIC à chaque dit temps de rétention et d'au moins deux intensités du deuxième XIC aux temps de rétention adjacents, la soustraction des intensités normalisées du deuxième XIC des intensités normalisées correspondantes du premier XIC, et le calcul d'une mesure statistique des intensités de différence ;
l'identification d'au moins une région d'au moins un temps de rétention où au moins une courbe de soustraction des $\binom{M}{2}$ courbes de soustraction présente des valeurs qui se situent dans la limite d'une valeur seuil de zéro à l'aide du processeur ; et
pour chaque région de l'au moins une région, l'obtention d'au moins deux XIC utilisés pour calculer l'au moins une courbe de soustraction identifiant la région et l'ajout de chaque crête des au moins deux XIC qui se situe dans la région à un groupe de crêtes à l'aide du processeur.

9. Procédé selon la revendication 8, dans lequel le calcul d'une mesure statistique des intensités de différence comprend le calcul d'une moyenne des intensités de différence.

10. Procédé selon la revendication 9, dans lequel la moyenne $\mu_{i+m}$ des intensités de différence calculées pour un temps de rétention, $i + m$, est calculée en fonction de

$$\mu_{i+m} = \frac{1}{N}\sum_{j=1}^{N}\left(\left(\frac{a_{i+j}}{a_{i+m}}\right)^{\frac{1}{2}} - \left(\frac{b_{i+j}}{b_{i+m}}\right)^{\frac{1}{2}}\right),$$

où $N$ est le nombre d'intensités de différence calculées à chaque temps de rétention, $N$ est un nombre impair, $m$ est le point médian de $N$, et $\left(\frac{a_{i+j}}{a_{i+m}}\right)^{\frac{1}{2}} - \left(\frac{b_{i+j}}{b_{i+m}}\right)^{\frac{1}{2}}$ pour $j = 1$ à N sont les intensités de différence calculées pour le temps de rétention $i + m$.

11. Procédé selon la revendication 8, dans lequel le calcul d'une mesure statistique des intensités de différence comprend le calcul d'un écart-type des intensités de différence.

12. Procédé selon la revendication 11, dans lequel l'écart-type $\sigma_{i+m}$ des intensités de différence calculées pour un temps de rétention, $i + m$, est calculé en fonction de

$$\sigma_{i+m} = \sqrt{\sum_{j=1}^{N}\frac{1}{N}\left(\left(\frac{a_{i+j}}{a_{i+m}}\right)^{\frac{1}{2}} - \left(\frac{b_{i+j}}{b_{i+m}}\right)^{\frac{1}{2}} - \mu_{i+m}\right)^{2}},$$

où $N$ est le nombre d'intensités de différence calculées à chaque temps de rétention, $N$ est un nombre impair, $m$ est le point médian de $N$, $\left(\frac{a_{i+j}}{a_{i+m}}\right)^{\frac{1}{2}} - \left(\frac{b_{i+j}}{b_{i+m}}\right)^{\frac{1}{2}}$ pour $j = 1$ à $N$ sont les intensités de différence calculées pour le temps de rétention $i + m$, et $\mu_{i+m}$ est la moyenne calculée en fonction de

$$\mu_{i+m} = \frac{1}{N}\sum_{j=1}^{N}\left(\left(\frac{a_{i+j}}{a_{i+m}}\right)^{\frac{1}{2}} - \left(\frac{b_{i+j}}{b_{i+m}}\right)^{\frac{1}{2}}\right).$$

13. Procédé selon la revendication 8, dans lequel le calcul d'une mesure statistique des intensités de différence comprend le calcul de la moyenne, du mode ou de l'écart des intensités de différence.

14. Procédé selon la revendication 8, comprenant en outre la notation de chaque groupe de crêtes d'au moins une région et l'utilisation du groupe de crêtes au plus haut score pour identifier ou quantifier le composé connu à l'aide du processeur.

15. Produit de programme informatique, comprenant un support de stockage non transitoire et tangible lisible par ordinateur dont le contenu comprend un programme avec des instructions étant exécutées sur un processeur de manière à effectuer un procédé destiné à regrouper des crêtes de chromatogrammes d'ions extraits (XIC) d'au moins deux ions produits d'un composé connu, le procédé comprenant :

la fourniture d'un système, le système comprenant au moins un module de logiciel distinct, et les modules de logiciel distincts comprenant un module de mesure et un module d'analyse ;
l'obtention d'une collection de spectres d'ions produits pour une plage de masse entière pour une pluralité de temps de rétention à l'aide du module de mesure, un composé connu étant séparé d'un mélange échantillon à l'aide d'un dispositif de séparation étant séparé d'un mélange échantillon à l'aide d'un dispositif de séparation et au moins un balayage de spectrométrie de masse / spectrométrie de masse (SM/SM) étant effectué sur le mélange échantillon de séparation à chaque temps de rétention d'une pluralité de temps de rétention à l'aide d'au moins une largeur de fenêtre de masse séquentielle d'ions précurseurs afin de couvrir la plage de masse entière, produisant la collection de spectres d'ions produits pour la plage de masse entière pour la pluralité de temps de rétention à l'aide d'un spectromètre de masse ;

la sélection de *M* ions produits du composé connu à l'aide d'un module d'analyse ;

le calcul d'un XIC pour chacun des *M* ions produits à partir de la collection de spectres d'ions produits à l'aide du module d'analyse, produisant *M* XIC ;

la soustraction de chaque XIC des *M* XIC de chacun des autres *M* XIC à l'aide du module d'analyse, produisant

$\binom{M}{2}$ courbes de soustraction, chaque courbe de soustraction étant calculée à partir d'un premier XIC et d'un deuxième XIC par, à chaque temps de rétention, la normalisation d'une intensité du premier XIC à chaque temps de rétention et d'au moins deux intensités du premier XIC à au moins deux temps de rétention adjacents, la normalisation d'une intensité du deuxième XIC à chaque dit temps de rétention et d'au moins deux intensités du deuxième XIC aux temps de rétention adjacents, la soustraction des intensités normalisées du deuxième XIC des intensités normalisées correspondantes du premier XIC, et le calcul d'une mesure statistique des intensités de différence ;

l'identification d'au moins une région d'au moins un temps de rétention où au moins une courbe de soustraction

des $\binom{M}{2}$ courbes de soustraction présente des valeurs qui se situent dans la limite d'une valeur seuil de zéro à l'aide du module d'analyse ; et

pour chaque région de l'au moins une région, l'obtention d'au moins deux XIC utilisés pour calculer l'au moins une courbe de soustraction identifiant la région et l'ajout de chaque crête des au moins deux XIC qui se situe dans la région à un groupe de crêtes à l'aide du module d'analyse.

FIG. 1

FIG. 2

FIG. 3

410

+1
μl
-1

0  10  20  30  40  50  60  70  80  90  100  110

Retention Time

400

FIG. 4

EP 3 254 300 B1

FIG. 5

FIG. 6

EP 3 254 300 B1

FIG. 7

FIG. 8

START

OBTAIN A COLLECTION OF PRODUCT ION SPECTRA FOR AN ENTIRE MASS RANGE FOR A PLURALITY OF RETENTION TIMES — 910

SELECT $M$ PRODUCT IONS OF THE KNOWN COMPOUND USING A PROCESSOR — 920

CALCULATE AN XIC FOR EACH OF THE $M$ PRODUCT IONS FROM THE COLLECTION OF PRODUCT ION SPECTRA, PRODUCING $M$ XICS USING THE PROCESSOR — 930

SUBTRACT EACH XIC OF THE $M$ XICS FROM EACH OF THE OTHER $M$ XICS USING THE PROCESSOR, PRODUCING $M!/(2!(M-2)!)$ SUBTRACTION CURVES — 940

IDENTIFY ONE OR MORE REGIONS OF ONE OR MORE RETENTION TIMES WHERE ONE OR MORE SUBTRACTION CURVES OF THE $M!/(2!(M-2)!)$ SUBTRACTION CURVES HAVE VALUES THAT ARE WITHIN A THRESHOLD VALUE OF ZERO USING THE PROCESSOR — 950

FOR EACH REGION OF THE ONE OR MORE REGIONS, OBTAIN TWO OR MORE XICS USED TO CALCULATE THE ONE OR MORE SUBTRACTION CURVES IDENTIFYING THE REGION AND ADD EACH PEAK OF THE TWO OR MORE XICS THAT IS IN THE REGION TO A PEAK GROUP USING THE PROCESSOR — 960

END

900

FIG. 9

EP 3 254 300 B1

1010

1020

MEASUREMENT
MODULE

ANALYSIS
MODULE

1000

FIG. 10

**EP 3 254 300 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 368874